# EUROPEAN PATENT APPLICATION

(11) **EP 3 085 675 A1**
(43) Date of publication of application: **26.10.2016**
(21) Application number: 15164726.0
(22) Date of filing: 22.04.2015
(51) Int. Cl.: C04B 26/26, C04B 20/10

(54) **ADDITIVE FOR A BITUMINOUS BINDER RESPECTIVELY A BITUMINOUS COMPOSITE MATERIAL**

(71) Applicant: Eidgenössische Materialprüfungs- und Forschungsanstalt EMPA, 8600 Dübendorf (CH)
(72) Inventor: Jeoffroy, Etienne, 8051 Zürich (CH); Partl, Manfred, 5072 Oeschgen (CH); Studart, André, 8044 Zürich (CH)
(74) Representative: Schneider Feldmann AG Patent- und Markenanwälte

(57) **Abstract**

An additive for a bituminous binder respectively a bituminous composite material, able to reduce bituminous binder respectively bituminous composite material viscosity when an alternating magnetic field is applied, in particular for healing pavement cracks and in-depth micro-cracks in asphalt, wherein the additive comprises an amount of magnetic iron oxide particles should be improved, in order to reach bituminous composite material respectively a bituminous binder which can be melted in a faster and simplified way, in particular usable for crack healing of asphalt structures on site. This is reached by forming the additive comprising at least a part of magnetic iron oxide nanoparticles with average sizes between 1 nm and 300 nm coated with a fatty acid.

## Description

### TECHNICAL FIELD

The present invention describes an additive for a bituminous binder respectively a bituminous composite material, able to reduce viscosity of a bituminous binder respectively bituminous composite material by applying an alternating magnetic field, in particular for healing adhesive and cohesive pavement cracks and in-depth micro-cracks in asphalt, wherein the additive comprises an amount of magnetic oxide particles, a method for production of an additive for a bituminous binder respectively a bituminous composite material, enable to reduce bituminous binder respectively bituminous composite material viscosity when an alternating magnetic field is applied, in particular for healing adhesive and cohesive pavement cracks and in-depth micro-cracks in asphalt, wherein the additive comprises an amount of magnetic oxide particles, a bituminous composite material, comprising a bituminous binder in form of a thermoplastics material and amounts of a mineral filler and/or sand and/or stone aggregates, a method for production of a bituminous composite material and a method for glueing together pre-fabricated bituminous elements to existing surfaces and/or healing pavement cracks and in-depth micro-cracks in asphalt in a bituminous composite material.

### STATE OF THE ART

Exposure to years of mechanical and thermal stresses as well as environmental effects (oxidation from the air, UV, moisture etc.) have an impact on the stiffness and brittleness of road pavements, which makes them prone to cracking due to loss of adhesion and cohesion. It results in the development of micro-cracks and micro-debonding of interfaces between components of the pavement material (e.g. stones) and between the pavement layers, which eventually coalesce, form macro-cracks and debond, hence causing irreversible damages.

However, at the stage of micro-crack development itself, recovery of mechanical properties could be achieved by closing these micro-cracks and debonded areas, partially or totally. Increasing focus is directed towards the closure of micro-cracks due to their role in leading to catastrophic failures.

As generally stated in A. Bhasin, A framework to quantify the effect of healing in bituminous materials using material properties, Road Materials and Pavement Design, 9 (2008) 219-242, micro-cracks within bituminous materials can be healed.

Basically, bituminous composite materials such as asphalt for road pavements and buildings are composites consisting of a bituminous binder, mineral filler (usually <0.063 mm), sand (usually 0.063 - 2 mm), cubical stone aggregates (usually 2 - 16 mm) and air voids (usually up to 20 % vol.).

The bituminous binder is a thermoplastic bitumen-based material obtained from crude oil distillation. It essentially consists of mixtures of organic hydrocarbons of high molecular weight, with high binding capacity resulting from physical and chemical interactions with the stones. Bituminous binder may include additives such as polymers or fibers can be added to the bituminous binder respectively to the bituminous composite materials enhancing mechanical and chemo-physical properties.

By temporarily reducing the viscosity of the bituminous binder, it is demonstrated that bituminous materials can recover mechanical properties, as disclosed by A. Bhasin. This process, called "healing", can be defined as the mechanism by which cracks and debonding in bituminous materials are partially or completely eliminated. It can result in prolonged service life of the materials.

It is well known that healing of micro-cracks and debonding in bituminous materials can be initiated by increasing its temperature. If the material temperature is increased up to 50°C - 100°C (depending on the type of bitumen), the bituminous binder starts to flow. In the event of the development of a Mode I crack (opening mode) as defined in fracture mechanics, the bitumen will flow into the crack and fills it up gradually. On cooling down, the bituminous binder in the crack will solidify.

As known from US 20120261861, steel fibers have been used in bituminous materials as part of the bituminous composite material. Under the influence of an alternating magnetic field, heat generated from the fibers was transferred by conduction to the surrounding bituminous binder, leading to a decrease in its viscosity. This technique is valuable in the sense that it can decrease the viscosity within an asphalt structure without requiring to heat up the stone aggregates, just by applying the magnetic field. However, steel fibers affect the mechanical properties of the bituminous material and may cause corrosion especially at the later surface of the bituminous material. Moreover, the steel fibers tend to form cluster during mixing, thereby requiring a longer time and higher energy to raise the temperature to the required levels due to the larger volume ratio of fibers. The problem with the clustering influence the heat distribution and often results in large local temperature gradients within the bituminous material that may damage the structure when reaching very high temperature locally.

In KR101248960 an asphalt with self-healing function is disclosed, using a magnetic field and a crack repairing method. An asphalt binder mixed with conductive fibers can be brought in a cracked part of the pavement and will be heated by high frequency magnetic field inside the asphalt. Beside the asphalt binder and the conducting fibers a graphite-based reinforcing fiber is mixed into the composition and an emulsifier is coated on the external surface of the conductive fiber body. Probably due to the coating of the conducting fibers the resulting efficiency of the heating process is low, resulting in long time heating steps with insufficient heating temperatures.

A general method for melting a thermoplastic product like a bituminous composite material with pre-embedded electrically-conductive materials such as iron, iron alloys and iron oxides and diverse other conductive materials, using an electromagnetic field, is proposed in US2014263283. The general idea is using an inductive heater for melting the thermoplastic product, this could be a bituminous binder with added electrically-conductive materials, for using the thermoplastic composite product as pavement crack sealant. According the US2014263283 the used electrically-conductive material could be in form of powder, pellets, spheres, granules, platelets, aggregates, fibers, filaments, flakes, shavings, chips, chunks, beads, wires, rods, tubes, coils, and/or any other suitable shape. This list seems to be very rough and it is not stated, if there exists any preferred shape. Possible particle sizes should lay between 1 nm to 2.5 cm. It is stated, that nearly any concentration of the ingredient is possible, which seems very vague. For a person skilled in the art it seems clear, that the particle size should be as small as possible and the dispersion of the electrically-conductive particles in the composite material should be as homogeneous as possible, leading to an eased homogenous melting. Even by using a heater setup with a mixer, the resulting melted composite material did not meet the requirements concerning short melting times and the sought efficiency of the heating process. Disturbing extreme clustering of the added particles in the bituminous binder occurs. It is also not clear, if the viscosity of a bituminous composite material can be controlled to avoid the filling of the air voids of the bituminous composite material, while the composite material is used for crack healing in pavements. In the case of nano-scale additives, dispersion becomes very difficult, leading to clustering by using just a feeder as they propose in US2014263283.

Also some research has been carried out, no satisfying bituminous composite materials respectively bituminous binders showing less clustering of added conductive particles could be found so far. In addition the application time for the crack healing procedure in the best case still takes several minutes. The occurring clustering has large influence on the heat distribution and therefore a tendency to create large temperature gradients. It also influences the mechanical stability of the structure since clustering results in "only" local softening.

### DESCRIPTION OF THE INVENTION

The object of the present invention is to create and process an additive for a bituminous composite material respectively a bituminous binder (i.e. a binder that contains bitumen but also other components such as polymers, fibers, etc), which leads to bituminous composite material respectively a bituminous binder which can be melted in a faster, more homogeneous and simplified way, in particular usable for crack healing from loss of cohesion and adhesion of materials made with bituminous binders for roads and buildings, such as asphalt for pavements, joint filling materials, waterproofing membranes, on site.

Using the bituminous composite material enables a construction worker to fluidify small amounts of bituminous composite material very shortly just where it is needed, using only the required quantity, which leads to a more efficient and thereby competitive crack healing application.

In our case, use of an additive comprising nano-scale size coated particles prevents the formation of high damage inducing temperature gradients within the bituminous binder. This is an important feature especially since materials like bitumen are susceptible to damage induced by temperature gradients during large heat sources. Moreover, our invention specifically proposes a technique, laid down in a clear and orderly manner, for preparing suitable binder systems with coated nanoparticles.

Applying an alternating magnetic field on a material indeed opens up alternatives for decreasing the viscosity of its components, but no one has yet proposed a feasible method for enabling a high magnetic response within bituminous materials while simultaneously guaranteeing the mechanical stability and functionality of the bituminous material structure.

In case of bituminous materials for road pavements, waterproofing membranes or joints, it is important to maintain the shape and structure of the material during and after the heating process. In case of road pavements, due to the presence of air voids, viscosity must be locally controlled to avoid the filling of the air voids with the bituminous binder, since it may negatively influence the stability of the material structure.

Compared to the current technology, the present invention provides an efficient, and repeatable method to decrease the viscosity of the bituminous binders rapidly and uniformly without heating up the stones significantly. Our differentiation relies on the use of magnetic nanoparticles which, when dispersed uniformly in a small quantity, do not influence the mechanical properties of the bituminous binder for healing for example. We also exploit the fact that magnetic materials in their oxide form such as iron oxide do not cause any corrosion. Furthermore, at the nano-range, such magnetic nanoparticles exhibit a strong magnetic response resulting in heat dissipation and therefore an acceleration of the decrease of the binder viscosity in the bituminous composite materials.

Indeed, the relevance of our method is highlighted by the fact that while it takes a time in the range of a few minutes for bituminous materials embedded with steel wool fibres to achieve a temperature increase of 50°C uniformly in the structure, the same increase can be achieved in a few seconds with embedded magnetic nanoparticles in close field conditions and additionally local overheating is avoided.

Finally, the method for preparing the bituminous binder materials containing magnetic nanoparticles is designed to ensure that the nanoparticles are always confined in the bituminous binder, thereby eliminating the risk of contamination.

The homogeneity of the suspension of magnetic nanoparticles in the bituminous binder is ensured by modifying the surface of the nanoparticles to promote repulsion from each other. The versatility of the methods described in this invention makes this approach a convenient and safe route for the application of bituminous materials for roads and buildings.

### BRIEF DESCRIPTION OF THE DRAWINGS

A preferred exemplary embodiment of the subject matter of the invention and results achievable with the subject matter of the invention are described below in conjunction with the attached drawings.
- Figure 1: shows a CryoSEM image of the coated magnetic nanoparticles distributed in bitumen, while
- Figure 2: shows a temperature kinetic curve (temperature vs. time) on bitumen comprising 1 vol. % of coated magnetic nanoparticles.

### DESCRIPTION

For improving the applicability of a bituminous binder or bituminous composite materials, comprising amounts of a bituminous binder and components such as mineral filler, sand, stone aggregates and air voids in various concentrations, an additive could be found, which will be presented in the following. This additive can be part of the bituminous binder respectively of the bitumen or bituminous composite material, leading to much shorter application times, with much shorter melting times of the bituminous binder respectively the bituminous composite material.

The disclosed additive comprises an amount of coated magnetic nanoparticles, which can be embedded uniformly in a bituminous binder forming a bituminous composite material comprising the additive.

The bituminous binder usually comprises at least an amount of a thermoplastic bitumen-based material, including bitumen or polymer-modified bitumen (classical term to represent the modified bitumen), obtained from crude oil distillation with mixtures of organic hydrocarbons of high molecular weight. Persons skilled in the art know different bitumen-based materials, usable for bituminous binder.

Beside the bitumen-based material, the bituminous binder comprises an amount of an additive, comprising coated magnetic, especially ferromagnetic, ferrimagnetic or superparamagnetic, nanoparticles.

These magnetic oxide nanoparticles are not electrically conductive with an average size range of 1nm to 300nm in length and/or height. These used oxide nanoparticles provide larger thermal response as compared with the electrically-conductive materials known form prior art. The use of magnetic oxide nanoparticles is therefore more convenient for application like asphalt roads which include kilometres of asphalt as they are more suitable for heat generation and heat distribution.

In particular iron oxide nanoparticles are favored because of their higher magnetic response with respect to their size, their ease of synthesis and their low toxicity. Experiments showed best results using iron(III) oxide (Fe3O4) and iron(III) oxide, especially in gamma phase (γ-Fe2O3) known as maghemite. These iron oxide nanoparticles can be effectively applied to increase the durability of bituminous road structures. In this case, these particles would qualify as small mineral aggregates. Also, since they are oxides, corrosion can be avoided. Beside iron-based oxide nanoparticles, also cobalt-, nickel- or rare earth-based oxide nanoparticles can be used.

The homogeneity of the suspension of magnetic nanoparticles in the later bituminous binder respectively bitumen is ensured by modifying the surface of the nanoparticles to promote repulsion from each other.

### coating

The resulting additive comprises coated magnetic nanoparticles, in particular iron-based oxide nanoparticles, in the above mentioned average size range, coated with surfactant-like material, for example a fatty acid, in particular coated with oleic acid, wherein the coated magnetic nanoparticles are dispersed in a non-polar liquid respectively low polarity liquid.

Several classes of surfactant-like materials can be used to coat the magnetic oxide nanoparticles surface. Some examples include carboxylates such as sodium citrate and oleic acid, polymers such as Polyvinyl alcohol, or inorganic materials such as silica.

Other possibilities of surface active molecules are poly(vinyl)butyral, Poly(vinyl)pirrolidone, sorbitan oleates (trade names e.g. Span 80, Span 85), block copolymers (e.g. Pluronic family), sodium dodecyl sulfate, alkylphenol ethoxylates and others. Here we propose to use oleic acid as an example of a typical surface active molecule leading to promising results, enabling a later high magnetic response from bituminous composite materials while simultaneously guaranteeing the mechanical stability of its bituminous binder.

The resulting thickness of the surfactant-like coating lies between 1nm and 10nm, most preferred between 1nm and 5nm, basically the molecular chain size of the used molecules.

### Method for preparation of the additive, bituminous binder and bitumen composite material

The method for preparation of the additive respectively the bituminous binder respectively the bituminous composite material, comprising magnetic nanoparticles will be described in the following.

### (1) Modification of the magnetic nanoparticles surface

Magnetic nanoparticles, in form of magnetic iron oxide nanoparticles within the above mentioned average size range are immersed in any solvent in which the nanoparticles can be dispersed in the presence of the surfactant-like surface active molecules. Here especially water is used, the coating could also be formed by mixing for example the nanoparticles with toluene or an equivalent non-polar solvent or low polarity solvent in the presence of Span 80 or Span 85.

Fatty acid, in particular oleic acid, will be added, acting as surfactant, before the solution is subjected to sonication and then heated up to 60°C for 24 hours. The oleic acid partly forms a film on the iron oxide nanoparticles building a fixed coating. The surface of the magnetic nanoparticles is thereby modified.

Afterwards a polar, aprotic solvent, in particular acetone is added to the suspension to separate the excess oleic acid from the nanoparticles, without removing the coating of the iron oxide nanoparticles. The coated magnetic oxide particles are removed from the suspension by simple drying or by washing the coated particles with any solvent that enables removal of excess surfactant without destroying the coating, therefore other solvents than acetone could be used.

In the next step, the excess oleic acid respectively not coated amount of oleic acid, water and acetone are then nearly completely removed by trapping the nanoparticles using a magnet.

### (2)

In the next step the coated magnetic nanoparticles are dispersed in a low polarity solvent miscible with bituminous binder.

The resulting additive mixture comprises magnetic nanoparticles coated with the fatty acid, in particular coated with oleic acid and suspended in the low polarity solvent. In this form the additive can be mixed with a bituminous binder forming a part of the bituminous composite material. For instance, toluene, xylene or tetrachloroethylene can be added as low polarity solvent to the coated magnetic nanoparticles or the coated magnetic nanoparticles can be mixed with toluene, xylene or tetrachloroethylene. Here toluene was preferred.

### (3)

Afterwards the liquid will at least partly be removed from the additive mixture obtained in (2) after mixing with toluene, for instance by evaporation. For example, if toluene is used as the miscible, it can be evaporated completely by heating the mixture at 160°C.

### Adding additive to bituminous binder

The additive respectively the at least partly evaporated additive mixture can be mixed with bituminous binder. As known the bituminous binder comprising the additive can be mixed with mineral filler and/or sand and/or stone aggregates and/or other material components such as mineral aggregates as necessary for the intended application, forming the bituminous composite material.

An example of a working bituminous composite material comprised:
Filler: 7.5 wt% weight per cent
Sand: 35 wt%
Mineral aggregates: 51 wt%
Bituminous binder: 6.5 wt% comprising 1 vol% of coated magnetic nanoparticles

As the bituminous composite material remains a thermoplastic, one can re-heat the bituminous composite material with bituminous binder comprising magnetic coated nanoparticles. It can also be used to allow glueing to interfaces. The magnetic coated nanoparticles remain suspended homogeneously in the binder respectively in the bituminous composite material.

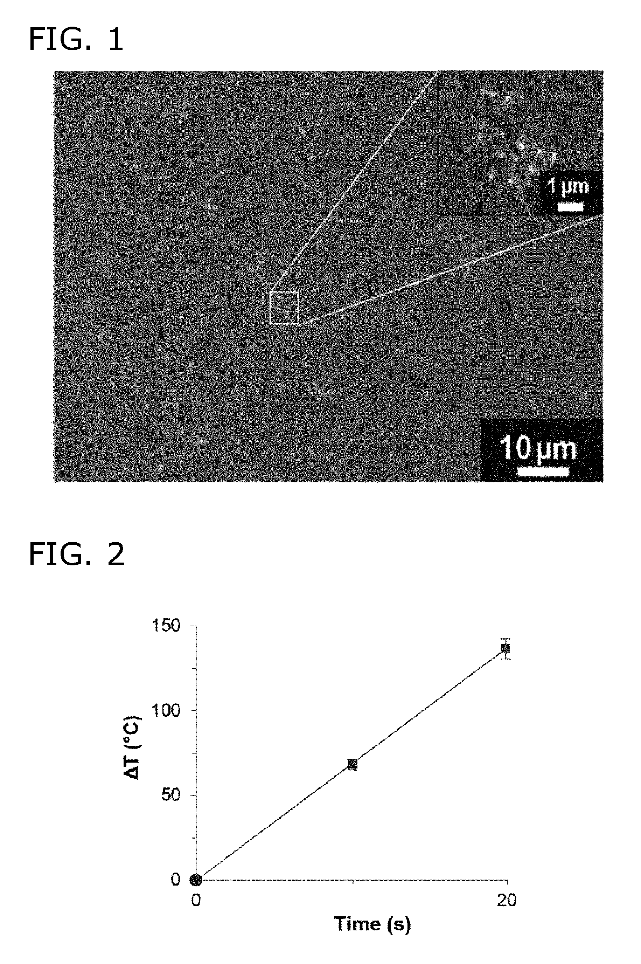

As can be seen in the SEM-image figure 1 of a bituminous composite material surface, a uniform dispersion of loosely clusters of coated magnetic nanoparticles can be achieved. The clusters exhibit an average diameter of three to four micrometer and average distance between fifteen to twenty micrometers. By embedding the magnetic coated nanoparticles in the bituminous composite material allows an external alternating magnetic field to heat up uniformly the bitumen in a few seconds time as will be described in the following.

### Thermal activation

The invention also includes a method to thermally activate the embedded magnetic coated nanoparticles in the bituminous composite material by applying an alternating magnetic field. The temporary reduction of the bituminous binder viscosity thus achieved facilitates healing of micro-cracks in pavements by re-activating the adhesion between the binder and material components like grids or mineral aggregates.

### Activation method/modifying viscosity

The method to activate the magnetic coated nanoparticles for decreasing the viscosity of the bituminous binder in a bituminous composite material will be disclosed in the following.

In case a crack or a debonding between the bituminous binder and a mineral aggregate in an oldfashioned bituminous composite material (without the bituminous binder, we present here) should be filled or glued, bituminous composite material comprising the additive with magnetic coated nanoparticles has to be applied to or in a pavement crack and/or in a micro-crack in the oldfashioned asphalt. The micro-cracks we are addressing are ranged from few micrometer to few centimetre in length or width.

In the case of an adhesive or cohesive crack in a bituminous composite material (e.g. a pavement) comprising already the nanoparticles the activation can be applied directly as written in the following step (I).

### (I) Application of an alternating magnetic field.

An alternating magnetic field is applied such that heat is generated from the magnetic coated nanoparticles within the bituminous composite material leading to an increase in the temperature of the bituminous composite material. For instance, an alternating magnetic field with a frequency of in the range of 0.1 to 1MHz, preferably 0.3 kHz with an amplitude in the range of 10 to 100 30 mT applied to a bituminous composite material containing magnetic coated nanoparticles can generate enough heat in a few seconds to make the bitumen flow. The temperature obtained in the structure can be monitored using Infrared imaging techniques. The temperature has to be maintained long enough above a temperature where bitumen is able to flow (typically between 30°C and 200°C depending on the bituminous binder type) and below a temperature which could damage the bitumen.

### (II) Removal of the alternating field.

After the high temperature is maintained long enough to enable bituminous binder to either adhere to a surface or to fill a crack, the alternating magnetic field is then removed.

As an example, practical heating measurements can be carried out using an alternating magnetic field developing 285kHz for a magnetic field of 30 mT. Samples are inserted in a copper coil (Ø 50 mm, 3 turns) and then heated for twenty seconds. Sample surface temperature is recorded using infrared camera measuring the emitted IR radiation. The temperature increase over time is displayed in Figure 2.

### Industrial application of healing cracks

With regards to the feasibility of using alternating magnetic field at the road scale, a setup designed for removing asphalt pavements is available on the market, WO200711102. This technique enables the heating of a steel plate on a bridge to delaminate the bituminous layer. Similar setups can be adapted for the heating of magnetic additives embedded in bituminous composite materials.

Typically in our case, we aim at healing cracks and debonding present in the topmost layer of the different road layers, which means not more than seven centimeters in thickness. As a result, the influence of the field attenuation should be limited.

In addition to pavement healing applications, the "on-demand" temperature induced reduction of bituminous binder viscosity in bituminous composite materials allows triggering multiple effects. For example, it can promote adhesion of the bituminous composite material to different surfaces, like attaching bituminous joint sealings to structural elements (e.g. made out of concrete) or glueing waterproofing membranes to the substrate.

Waterproofing membranes are used to act as a barrier between a building structure and water. Applying one or various layers of membranes prevents water from infiltrating. Typically, the bitumen-based membrane contains polymer modified bitumen and is sealed to the substrate by melting the bitumen using flame or hot air. Depending on the method, temperatures can reach 400°C or even 800°C, leading to possible damages in the bitumen microstructure. However, by progressively heating the bitumen membrane using the combination of magnetic nanoparticles and an alternating magnetic field as described in this application, the membrane can reach a specific temperature without the associated negative effects of overheating.

Coated magnetic nanoparticles could also be used as a trigger for breaking bitumen emulsions. Bitumen emulsions are a dispersion of small droplets of bitumen in water dispersed by using an emulsifying agent. They are generally used for maintenance and do not require high temperature. The separation of water from bitumen in the emulsion is termed as breaking. After this step, the bitumen part becomes adhesive and water-resistant. To control the breaking, iron oxide coated nanoparticles can be incorporated into the bitumen droplets. By heating the nanoparticles with the aid of an alternating magnetic field, the breaking would be instantaneously activated throughout the entire material. In direct contrast to bigger additives, the nanoparticles do not affect the emulsion viscosity due to their smaller sizes as well as concentration. Moreover, they can also be used as a stabilizer, similar to the principle of a pickering emulsion. Indeed, as they can be electrically charged they would interact with the bitumen droplets at the interface between water and bitumen.

Such coated magnetic nanoparticles can also be used to control the expansion of foamed bitumen. Foamed bitumen consists of a mixture of air, water and bitumen. It is produced in an expansion chamber where a small quantity of water is injected into hot bitumen. The bitumen expands to 5-15 times its original volume and forms a foam. This foam is particularly beneficial in wetting and coating the surface of mineral aggregates with a small quantity of bitumen. The expansion time of the foam is an important parameter to be controlled. By adding magnetic coated nanoparticles, the expansion time can be regulated by activating/deactivating the nanoparticles with an alternating magnetic field. Once the coated magnetic nanoparticles start generating heat, the bubbles will start disappearing. Again, contrary to other additives, gravity has a negligible effect on the nanoparticles and therefore they can be located at the interface between the bubbles. They can also be used as a stabilizing agent during foaming and thereby stop the expansion by locally heating their surroundings.

## Claims

1. Additive for a bituminous binder respectively a bituminous composite material, able to reduce viscosity of a bituminous binder respectively bituminous composite material by applying an alternating magnetic field, in particular for healing adhesive and cohesive pavement cracks and in-depth micro-cracks in asphalt, wherein the additive comprises an amount of magnetic oxide particles,
**characterized in that**
the additive comprises at least a part of magnetic iron-, cobalt-, nickel- or rare earth-based oxide nanoparticles, with average sizes in length and/or width between 1 nm and 300 nm, which are coated with a surfactant-like material.

2. Additive according to claim 1, wherein the surfactant-like material comprises fatty acid like oleic acid, carboxylates such as sodium citrate, polymers such as Polyvinyl alcohol, or inorganic materials such as silica.

3. Additive according to claim 1, wherein the surfactant-like material comprises poly(vinyl)butyral, Poly(vinyl)pirrolidone, sorbitan oleate, block copolymer, sodium dodecyl sulfate or alkylphenol ethoxylates.

4. Additive according to one of the preceeding claims, wherein an amount of Fe3O4 and/or γ-Fe2O3O (maghemite) is used for the magnetic iron oxide nanoparticles.

5. Additive according to one of the preceding claims, wherein the average thickness of the surfactant-like material coating is between 1 nm and 10 nm, preferably between 1 nm and 5 nm.

6. Method for production of an additive for a bituminous binder respectively a bituminous composite material, enable to reduce bituminous binder respectively bituminous composite material viscosity when an alternating magnetic field is applied, in particular for healing adhesive and cohesive pavement cracks and in-depth micro-cracks in asphalt, wherein the additive comprises an amount of magnetic oxide particles, **characterized by the steps of:**
- mixing of magnetic iron-, cobalt-, nickel- or rare earth-based oxide nanoparticles with average sizes between 1 nm and 300 nm with an amount of a surfactant-like material in a low polarity solvent
- sonication and heating up to at least 40°C, preferably 60°C for at least 2 hours, preferably twenty-four hours, while an additive solution comprising coated oxide nanoparticles with a surfactant-like material coating on the nanoparticle surface is formed, before
- a solvent, in particular acetone,
enabling removal of excess surfactant-like material without destroying the coating, is added, for separation of the excess surfactant-like material from the coated magnetic nanoparticles, followed by a subsequent
- trapping of the coated magnetic nanoparticles with a magnetic field and at least partly removing low polarity solvent, excess surfactant-like material and the solvent, before finally the coated magnetic nanoparticles are miscible in a bituminous binder.

7. Method for production of an additive according to claim 6,
wherein the low polarity solvent will at least be partly removed from the additive mixture according to claim 6, in particular by evaporation.

8. Method for production of an additive according to claim 6 or 7, wherein the low polarity solvent is water, toluene, xylene or tetrachloroethylene.

9. Method for production of an additive according to one of the claims 6 to 8, wherein the surfactant-like material comprises fatty acid like oleic acid, carboxylates such as sodium citrate, polymers such as Polyvinyl alcohol, or inorganic materials such as silica.

10. Method for production of an additive according to one of the claims 6 to 8, wherein the surfactant-like material comprises poly(vinyl)butyral, Poly(vinyl)pirrolidone, sorbitan oleate, block copolymer, sodium dodecyl sulfate or alkylphenol ethoxylates.

11. Bituminous composite material, comprising a bituminous binder in form of a thermoplastics material and amounts of a mineral filler and/or sand and/or stone aggregates,
**wherein**
the bituminous binder comprises at least a part of magnetic oxide nanoparticles with average sizes between 1 nm and 300 nm, which are coated with a surfactant-like material, wherein the percentage by volume of the coated magnetic iron oxide nanoparticles in the bituminous binder lies between 0.1 vol.% and 5 vol.%.

12. Bituminous composite material according to claim 11, wherein the surfactant-like material comprises fatty acid like oleic acid, carboxylates such as sodium citrate, polymers such as Polyvinyl alcohol, or inorganic materials such as silica.

13. Bituminous composite material according to one of the claims 11
or 12, wherein the bituminous composite material comprises between 0.5 vol.% and 5 vol.% of magnetic coated oxide nanoparticles.

14. Bituminous composite material according to one of the claims 11 to 13, wherein the average thickness of the surfactant-like material coating is between 1 nm and 10 nm, preferably between 1 nm and 5 nm.

15. Method for production of a bituminous composite material according to claims 11 to 14,
**characterized in that,**
a bituminous binder is mixed with an additive according to one of the claims 1 to 5 and additionally with portions of a mineral filler and/or sand and/or stone aggregates and/or other material components such as mineral aggregates.

16. Method for glueing together pre-fabricated bituminous elements to existing surfaces and/or healing pavement cracks and in-depth micro-cracks in asphalt in a bituminous composite material according to claim 11 or 14,
**characterized by the steps of:**
- applying an alternating magnetic field to the bituminous composite material for seconds up to two minutes, leading to temporary reduction of the bituminous binder viscosity, enabling flow of the bituminous composite material in the vicinity of the pavement crack and/or in the micro-crack in asphalt closing the crack
and subsequent
- removal of the alternating magnetic field.

17. Method for healing pavement cracks and in-depth micro-cracks in asphalt according to claim 16, wherein an alternating magnetic field in the range between 0.1 to 1 MHz, preferably 285 kHz with an amplitude in the range between 10 to 100 mT is applied to a bituminous composite material containing magnetic coated nanoparticles for sufficient time until the bituminous binder filled in the crack.
